Europäisches Patentamt

European Patent Office

Office européen des brevets

(19)

(11) Numéro de publication: **0 487 955 A1**

## (12) DEMANDE DE BREVET EUROPEEN

(21) Numéro de dépôt: **91119032.0**

(22) Date de dépôt: **08.11.91**

(51) Int. Cl.⁵: **G01C 17/06**

(30) Priorité: **30.11.90 FR 9015142**

(43) Date de publication de la demande:
**03.06.92 Bulletin 92/23**

(84) Etats contractants désignés:
**CH DE GB LI**

(71) Demandeur: **FABRIOUE D'EBAUCHES DE SONCEBOZ S.A.**
**Route de Pierre-Pertuis 15**
**CH-2605 Sonceboz(CH)**

(72) Inventeur: **Zaslawsky, Abraham**
**Comba-Borel 7**
**CH-2000 Neuchâtel(CH)**

(74) Mandataire: **de Raemy, Jacques**
**ICB Ingénieurs Conseils en Brevets SA**
**Passage Max. Meuron 6**
**CH-2001 Neuchâtel(CH)**

(54) **Boussole.**

(57) La boussole comprend une carrure (1) obturée par un fond (2) et une glace (3) ainsi qu'une aiguille de boussole (4) supportée par un arbre (30) comportant des premier (5) et second (6) pivots, le premier pivot étant monté dans un palier (7) solidaire du fond (2).

Le second pivot (6) est engagé dans un second palier (9) solidaire d'une paroi transparente (8) située entre la glace et le fond et l'aiguille de boussole se meut entre le fond et la paroi.

Cette disposition permet d'éviter le perçage de la glace et simplifie le montage de la boussole.

Fig. 2

EP 0 487 955 A1

La présente invention est relative à une boussole comprenant une carrure obturée par un fond et une glace et une aiguille de boussole supportée par un arbre comportant des premier et second pivots, ledit premier pivot étant monté dans un premier palier solidaire du fond.

La boussole présentée dans le document CH-A-661 174 (= US-A-4 702 612) comporte deux plaques de verre, une aiguille de boussole mobile entre ces plaques et un arbre supportant l'aiguille de boussole. Chaque plaque porte un dispositif de palier qui est engagé dans son épaisseur, ce dispositif comportant un coussinet de pierre fixé à la plaque. L'arbre présente à ses deux extrémités des pivots comportant chacun une partie cylindrique engagée dans le coussinet.

Le dispositif du document cité présente au moins deux inconvénients. On notera d'abord que pour exécuter la boussole, il est nécessaire de percer les plaques de verre qui supportent les paliers. Cette opération, qui demande une grande précision, est onéreuse tant par les outils qu'elle met en oeuvre que par le temps qu'il faut passer pour mener cette opération à bien. On notera aussi que le montage du dispositif est malaisé en ce sens qu'il est nécessaire d'introduire la plaque supérieure dans la carrure qui la porte avant que le pivot de l'arbre de l'aiguille ne soit introduit dans la pierre du palier. Ceci amène à de longs tâtonnements avec tous les risques de casse qu'ils comportent.

Pour pallier les inconvénients cités ci-dessus, la boussole de l'invention est caractérisée par le fait qu'elle comporte une paroi transparente située entre la glace et le fond, ladite paroi portant un second palier dans lequel est engagé le second pivot, l'aiguille de boussole se mouvant entre ledit fond et ladite paroi.

L'invention va être décrite maintenant à l'aide du dessin qui montre un exemple d'exécution, dessin dans lequel :

- la figure 1 est une vue de dessus de la boussole selon l'invention,
- la figure 2 est une coupe transversale dans la boussole montrée en figure 1, et
- la figure 3 montre une étape de montage de la boussole.

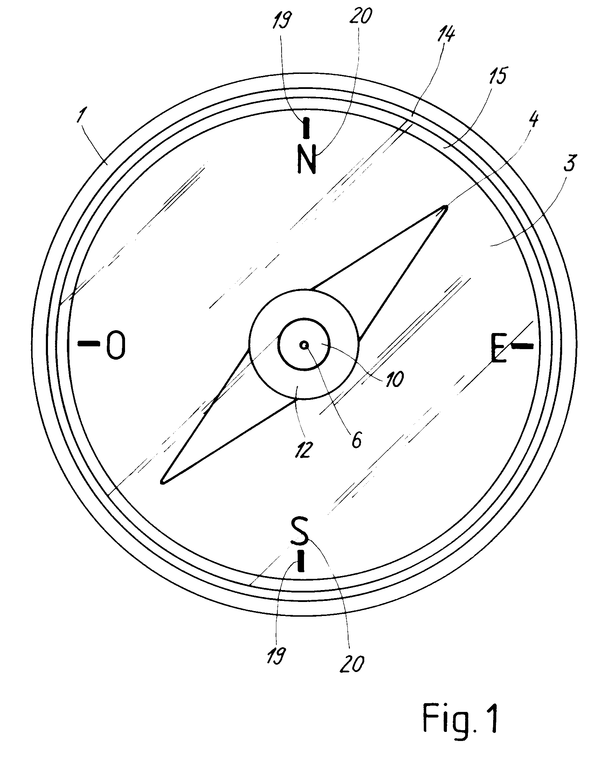

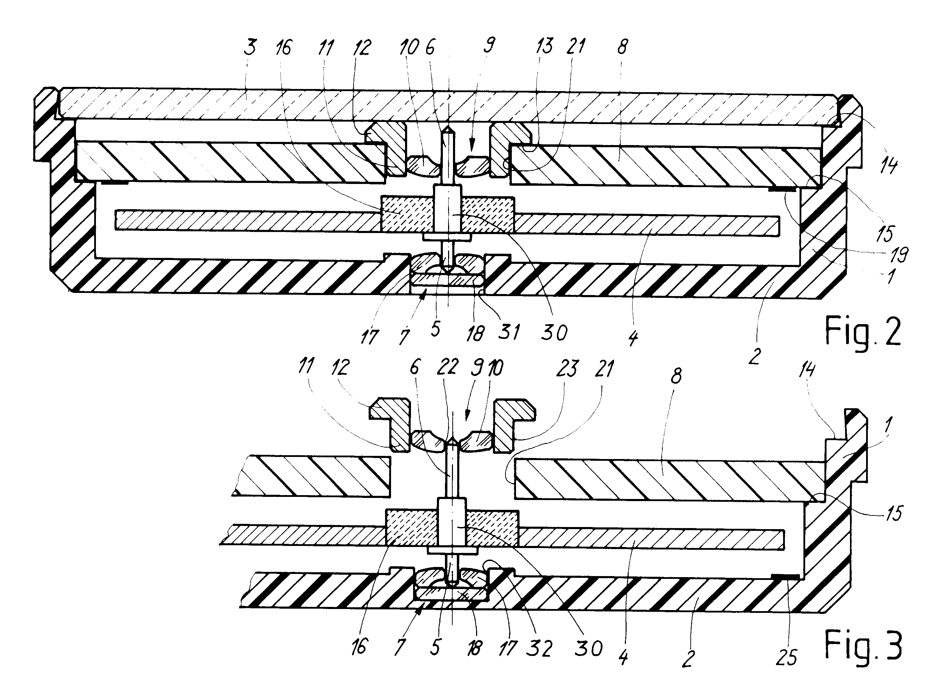

La boussole présentée aux figures 1 et 2 possède un boîtier comportant une carrure 1 obturée par un fond 2 et une glace 3. Dans cet espace se meut une aiguille de boussole 4 supportée par un arbre 30, ce dernier présentant un premier pivot 5 et un second pivot 6. Le premier pivot 5 est monté dans un premier palier 7 solidaire du fond 2. Selon une caractéristique essentielle de l'invention, la boussole comporte une paroi transparente 8 située entre la glace 3 et le fond 2, cette paroi 8 portant un second palier 9 dans lequel est engagé le second pivot 6 de l'arbre 30. La figure 2 montre que l'aiguille de boussole 4 est disposée entre le fond 4 et la paroi 8.

On remarque d'emblée que cette disposition est avantageuse puisqu'elle évite le perçage de la glace, cette glace pouvant être soit un verre minéral soit un saphir.

L'aiguille de boussole 4 peut être une simple aiguille aimantée N-S réalisée dans un matériau magnétique présentant une certaine rémanence ou peut être, comme cela est montré en figure 2, faite en fer doux et collée sur un aimant cylindrique 16 à direction d'aimantation diamétrale dans la direction de la longueur de l'aiguille.

Le premier palier 7 ou palier inférieur se compose d'une pierre percée 17, olivée ou non, dans laquelle pénètre le pivot 5 et d'un contre-pivot 18 formant butée. L'ensemble est chassé dans un perçage 31 que présente le fond 2. Pour rendre le palier étanche, on peut coller le contre-pivot 18 dans l'ouverture 31. En variante, et comme on peut le voir en figure 3, l'ensemble pierre 17 et contre-pivot 18 peuvent être chassés dans un trou borgne 32 pratiqué dans le fond 2, et étanche par construction.

La figure 2 montre encore que le second palier 9 comporte une pierre percée 10 pour recevoir le second pivot 6 de l'arbre 30. Selon un mode d'exécution particulièrement intéressant de l'invention, la pierre 10 est ajustée dans un chaton 11, lequel comporte à l'une de ses extrémités une collerette 12. Le chaton 11 est engagé librement du côté glace 3 dans un perçage 21 pratiqué dans la paroi 8 jusqu'à appui de la collerette sur la paroi. Le chaton 11 est maintenu axialement en place par appui de la glace 3 sur la collerette 12, la glace servant en outre de plaquette de contre-pivot pour le second pivot 6 de l'arbre 30. Ainsi, dans cette construction, la glace 3 présente-t-elle trois fonctions : celle de fermer la boussole, celle de limiter en hauteur l'ébat de l'arbre 30 de la boussole et celle d'appliquer la collerette 12 du chaton 11 contre la paroi 8 qui se trouve à son tour assujettie à la carrure, comme cela apparaîtra plus loin.

On voit sur la figure 2 que l'intérieur de la carrure 1 présente un premier épaulement 14 sur lequel repose la glace 3 et un second épaulement 15 sur lequel repose la paroi transparente 8. Bien qu'il pourrait être rapporté après coup sous la carrure 1, au moyen de vis par exemple, la figure montre que ce fond est fait d'une pièce avec la carrure. Cette construction permet de mouler en une seule opération la carrure et le fond en une matière synthétique par exemple. On notera ici que la carrure 1 et le fond 2 doivent impérativement être faits en matériaux non magnétiques pour éviter la canalisation du champ magnétique terrestre et partant, pour éviter des indications erronées de l'aiguille de boussole.

La paroi 8 est avantageusement réalisée en matière synthétique transparente. On remarquera qu'elle peut être faite par simple étampage pour découper d'un coup sa périphérie ajustée à la carrure et son perçage 21 recevant le chaton 11. La figure 2 montre que sous la paroi 8, on a apposé des repères 19 indiquant les points cardinaux 20 (voir aussi figure 1), ces repères pouvant se trouver apposés aussi sur le fond (voir repère 25 de la figure 3) ou encore sous la glace 3 (exécution non représentée au dessin).

Pour simplifier le montage de la boussole et selon une caractéristique intéressante de l'invention, la figure 3 montre que la longueur du second pivot 6 est choisie de telle manière que ce second pivot 6 s'engage dans le perçage 22 de la pierre 10 avant que le chaton 11 ne s'engage par son bord annulaire 23 dans le perçage 21 pratiqué dans la paroi 8. Cet engagement, peut se faire à la main d'un seul coup, sans tâtonnement, et sans l'aide d'aucun outil, ce qui rend le montage de la boussole très aisé. Il en est de même de l'engagement de la paroi 8 sur l'épaulement 15 qui est simplement posée sur ledit épaulement, le tout étant maintenu en place une fois que la glace 3 est posée sur la carrure, par appui de ladite glace sur la collerette 12.

La boussole de l'invention est très facile à monter et fait appel à des pièces simples à réaliser. On remarquera qu'elle est d'une qualité supérieure à la moyenne en ce sens qu'elle est capable de fonctionner dans n'importe quelle position, grâce aux pivots et aux paliers dont elle est équipée, ce qui n'est pas le cas des boussoles pivotant dans de simples crapaudines.

**Revendications**

1. Boussole comprenant une carrure (1) obturée par un fond (2) et une glace (3) et une aiguille de boussole (4) supportée par un arbre (30) comportant des premier (5) et second (6) pivots, ledit premier pivot étant monté dans un premier palier (7) solidaire du fond, caractérisée par le fait qu'elle comporte une paroi transparente (8) située entre la glace et le fond, ladite paroi portant un second palier (9) dans lequel est engagé ledit second pivot, l'aiguille de boussole se mouvant entre ledit fond et ladite paroi.

2. Boussole selon la revendication 1, caractérisée par le fait que le second palier (9) comporte une pierre percée (10) pour recevoir le second pivot (6), ladite pierre étant ajustée dans un chaton (11) à l'une des extrémités duquel est pratiquée une collerette (12), le chaton étant engagé librement du côté glace dans un perçage (21) pratiqué dans la paroi jusqu'à appui de la collerette sur ladite paroi, ledit chaton étant maintenu axialement en place par appui de ladite glace sur ladite collerette.

3. Boussole selon la revendication 2, caractérisée par le fait que la longueur du second pivot (6) est telle que, lors du montage de la boussole, le second pivot pénètre dans la pierre avant que le chaton ne s'engage dans le perçage pratiqué dans la paroi transparente 8.

4. Boussole selon la revendication 2, caractérisée par le fait que la glace (3) est utilisée comme plaquette de contre-pivot.

5. Boussole selon la revendication 1, caractérisée par le fait que le fond (2) est fait d'une pièce avec la carrure (1).

6. Boussole selon la revendication 1, caractérisée par le fait que la paroi (8) et la glace (3) reposent sur des épaulements (14, 15) pratiqués à l'intérieur de la carrure (1).

7. Boussole selon la revendication 1, caractérisée par le fait que des repères (19) indiquant les points cardinaux (20) sont apposés sous la paroi transparente (8).

8. Boussole selon la revendication 1, caractérisée par le fait que des repères (25) indiquant les points cardinaux sont apposés sur le fond 2.

9. Boussole selon la revendication 1, caractérisée par le fait que des repères indiquant les points cardinaux sont apposés sous la glace (3).

10. Boussole selon la revendication 1, caractérisée par le fait que la carrure (1) et le fond (2) sont réalisés en matériaux non magnétiques.

Fig. 1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A-661 174 (FINGER)<br>* page 4, colonne de gauche, ligne 37 - colonne de droite, ligne 26; figures 2-4 *<br>--- | 1,2 | G01C17/06 |
| A | FR-A-745 442 (NYA)<br>* page 1, ligne 38 - page 2, ligne 10; figure 1 *<br>--- | 1 | |
| D,A | CH-A-666 381 (ROVENTA-HENEX)<br>* le document en entier *<br>----- | 1 | |

| DOMAINES TECHNIQUES RECHERCHES (Int. Cl.5) |
|---|
| G01C<br>G04B |

Le présent rapport a été établi pour toutes les revendications

| Lieu de la recherche | Date d'achèvement de la recherche | Examinateur |
|---|---|---|
| LA HAYE | 05 FEVRIER 1992 | HOEKSTRA F. R. |